(19) Europäisches Patentamt
European Patent Office
Office européen des brevets

(11) Veröffentlichungsnummer: **0 098 526**
**A2**

(12) # EUROPÄISCHE PATENTANMELDUNG

(21) Anmeldenummer: **83106363.1**

(22) Anmeldetag: **30.06.83**

(51) Int. Cl.³: **G 05 D 23/12**

(30) Priorität: **02.07.82 DE 3224731**

(43) Veröffentlichungstag der Anmeldung: **18.01.84**
**Patentblatt 84/3**

(84) Benannte Vertragsstaaten: **AT BE CH FR GB IT LI LU NL SE**

(71) Anmelder: **Kernforschungsanlage Jülich Gesellschaft mit beschränkter Haftung, Postfach 1913, D-5170 Jülich (DE)**

(72) Erfinder: **Welter, Jean-Marie, Dr., Wirichsbongardstrasse 43, D-5100 Aachen (DE)**

(54) **Temperaturregler mit gasförmigem Arbeitsmittel.**

(57) Für einen Temperaturregler mit Temperaturfühler und Stellglied ist ein geschlossenes Membransystem mit gasförmigem Arbeitsmittel zum Verstellen des Stellgliedes vorgesehen. Das Stellglied wird in Abhängigkeit vom Druck des gasförmigen Arbeitsmittels über eine Membran gegen den Druck einer Feder bewegt. Membranraum und Innenraum des Temperaturfühlers sind räumlich miteinander verbunden und gasdicht abgeschlossen.

Als nichtkondensierendes Arbeitsmittel, dessen Druck im Arbeitsbereich nur von der Temperatur abhängt, ist Wasserstoff im thermodynamischen Gleichgewicht mit einem Feststoff im Temperaturfühler eingesetzt. Der Feststoff weist zumindest zwei für den Austausch mit Wasserstoff aktivierte Feststoffphasen auf. Entweder bildet die eine der Feststoffphasen ein Wasserstoff in Lösung enthaltendes Metall oder eine metallische Verbindung und die andere Feststoffphase ein Hydrid des Metalls oder der metallischen Verbindung, oder die Feststoffphasen bestehen aus zwei sich in thermodynamischem Gleichgewicht miteinander befindenden Hydriden des Metalls der metallischen Verbindung. Die jeweilige im Temperaturfühler einzusetzende Feststoffmenge wird in Abhängigkeit von der gewünschten Zeitkonstante des Temperaturreglers bestimmt.

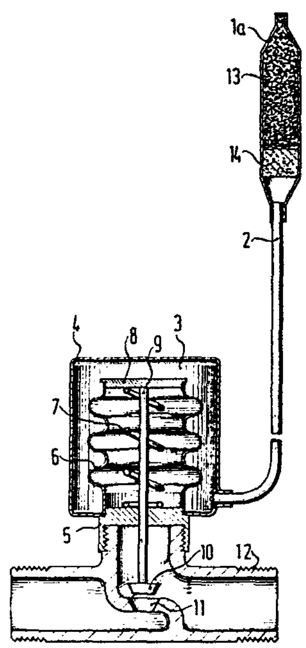


EP 0 098 526 A2

0098526

Kernforschungsanlage Jülich
Gesellschaft mit beschränkter Haftung

# Temperaturregler mit gasförmigem Arbeitsmittel

Die Erfindung bezieht sich auf einen Temperaturregler mit Stellglied und Temperaturfühler. Das Stellglied wird über eine Membran in Abhängigkeit vom Druck eines gasförmigen Arbeitsmittels gegen eine Feder bewegt. Membranraum und Innenraum des Temperaturfühlers sind gasdicht abgeschlossen. Sie sind mit Arbeitsmittel gefüllt und derart räumlich miteinander verbunden, daß eine Temperaturänderung im Temperaturfühler den Druck im Membranraum verändert.

Temperaturregler, die ein geschlossenes Membransystem zur Verstellung eines Stellgliedes aufweisen, sind bekannt. Die Membransysteme sind mit einem Arbeitsmittel gefüllt, dessen Druckänderung bei konstantem Volumen des geschlossenen Systems infolge einer Veränderung der Temperatur genutzt wird. Je nach vorhandenem Druck im Membransystem wird mittels sich druckabhängig bewegender Membran die Lage eines mit der Membran verbundenen Regel- oder Stellgliedes verändert. Beispielsweise wird bei Raumheizungsreglern im Falle eines Anstieges der Raumtemperatur die Heizleistung über ein sich schließendes Regelventil gedrosselt oder abgestellt, bei fallender Raumtemperatur und somit fallendem Druck im Membransystem die Heizleistung mittels sich öffnenden Regelventils gesteigert.

Als gasförmige Arbeitsmittel sind Gase bekannt, die im Arbeitstemperaturbereich des Membransystems ihren Aggregatzustand nicht ändern. Solche Gase weisen jedoch nur eine geringe Temperaturempfindlichkeit auf. Deshalb werden auch organische Verbindungen verwendet, wie Propan, Butan, Methylchlorid, Methylamin, Fluoralkane, die im Membransystem bei Arbeitstemperaturen um 300 K einerseits als flüssige Phase, andererseits als Sattdampf vorliegen. Bei diesen Systemen befinden sich die flüssige und die dampfförmige Phase im Gleichgewicht, und bei einer Temperaturänderung findet eine Phasenumwandlung statt, wobei der Dampfdruck p innnerhalb des Membransystems nur von der Temperatur T der Flüssigkeit abhängt. Es gilt folgende Beziehung:

$$p\ (T) = p_o \exp\left(-\frac{\Delta H}{RT}\right) \qquad (1)$$

In dieser Gleichung bedeuten

$p_o$ = Dampfdruck bei unendlich hoher Temperatur

$\Delta H$ = Verdampfungsenthalpie

R = Gaskonstante (8.314 J/mol K)

Die Verdampfungsenthalpie kann innerhalb weiter Temperaturintervalle als konstant angesetzt werden. Gleichung (1) zeigt, daß der Dampfdruck eine monoton wachsende, jedoch schwach nichtlineare Funktion der Temperatur ist. Deshalb kann p innerhalb eines begrenzten Arbeitstemperaturintervalls um eine Referenztemperatur $T_o$ linearisiert werden. Wenn T die Abweichung der Temperatur von $T_o$ bezeichnet, gilt

$$p\ (T) = p\ (T_o) \left[1 + \frac{\Delta H}{RT^2}\ \Delta T\right] \qquad (2)$$

Das Herstellen von Membransystemen, die mit organischen Verbindungen zu füllen sind, ist mit hohem Aufwand verbunden, vgl. DE-AS 2,533,823. Die Membransysteme weisen jedoch kleine Zeitkonstanten auf, d.h. sie reagieren auf Temperaturänderung durch Einstellen des neuen Gleichgewichtszustandes rasch. Für Raumheizungsregler ist das nicht immer von Vorteil. Um stabile Regelzustände zu erreichen, bedarf es einer Anordnung der Temperaturfühler in beruhigten Temperaturzonen, also in solchen Zonen, in denen die Temperatur durch lokale Einflüsse, beispielsweise durch Luftströmungen keinen stärkeren Schwankungen unterliegt. Nachteilig ist darüberhinaus, daß sich im Temperaturfühler des Membransystems gebildeter Sattdampf an solchen Stellen innerhalb des Membransystems wieder niederschlägt, an denen eine gegenüber dem Temperaturfühler niedrigere Temperatur herrscht. Der erforderliche Steuerdruck im Membransystem kann so in unerwünschter Weise verfälscht werden.

Die Gefahr von unerwünschter Kondensation im Membransystem wird bei Verwendung gasförmiger Arbeitsmittel vermieden, deren Gasphase im Gleichgewicht mit adsorbierenden Feststoffoberflächen steht. Beispielsweise können Stickstoff oder Kohlendioxid im Gleichgewicht mit Aktivkohle oder mit Zeolithen eingesetzt werden, die im Verhältnis zum Feststoffvolumen große adsorptionsfähige Oberflächen aufweisen. Abgesehen von der Tatsache, daß die durch adsorptive Bindung der Moleküle erzielten Effekte nur bei tiefen Temperaturen, typischerweise weit unterhalb des Wassergefrierpunktes für eine Regelung ausreichend sind, erschwert der

komplizierte Zusammenhang zwischen Feststofftemperatur, Gleichgewichtsdruck und Oberflächenbelegungskonzentration Ausbildung und Anwendung von Reglern mit derartigen Membransystemen.

Aufgabe der Erfindung ist es, einen Temperaturregler mit geschlossenem Membransystem und gasförmigen Arbeitsmittel anzugeben, das nicht unerwünscht kondensiert und dessen Druck im Arbeitsbereich nur von der Temperatur abhängt. Weiterhin soll in erster Näherung der Zusammenhang zwischen Druck und Temperatur linear sein. Auch soll die Empfindlichkeit des Membransystems und dessen Reaktion auf Temperaturänderungen in der Umgebung des Temperaturfühlers je nach technischer Anforderung in einfacher Weise einstellbar sein.

Diese Aufgabe der Erfindung wird bei einem Temperaturregler der eingangs genannten Art durch die in Patentanspruch 1 angegebene Ausbildung gelöst. Danach wird Wasserstoff als Arbeitsmittel im thermodynamischen Gleichgewicht mit einem in an sich bekannter Weise im Temperaturfühler angeordnetem Feststoff verwendet, der zumindest zwei für den Austausch mit Wasserstoff aktivierte Feststoffphasen aufweist. Entweder bildet die eine der Feststoffphasen ein Wasserstoff in Lösung enthaltendes Metall oder eine metallische Verbindung, und die andere Feststoffphase bildet ein Hydrid des Metalls oder der metallischen Verbindung. Oder die für den Austausch mit Wasserstoff aktivierten Feststoffphasen bestehen aus zwei sich im thermodynamischen Gleichgewicht befindenden Hydriden des Metalls oder der metallischen Verbindung. Die jeweilige

im Temperaturfühler einzusetzende Feststoffmenge wird in Abhängigkeit von der gewünschten Zeitkonstante des Temperaturreglers bestimmt. Zur Änderung des Druckes im Membransystem werden solche Gleichgewichte genutzt, in denen der Wasserstoffdruck bei einer bestimmten Temperatur unabhängig von der Konzentration des Wasserstoffs im Feststoff ist. Dies ist der Fall, wenn fast stöchiometrisch ausgebildete Metallhydridphasen mit einer entweder wasserstoffärmeren Metall/Wasserstoff-Lösungsphase oder weiteren Metallhydridphasen koexistieren, die einen niedrigeren oder höheren Wasserstoffgehalt aufweisen. Ähnlich wie beim Verdampfungsgleichgewicht der Dampfdruck ist beim erfindungsgemäßen Arbeitsmittel der Wasserstoffdruck allein von der Temperatur im Feststoff abhängig. Der Druckverlauf folgt einem der Beziehung (1) analogen Zusammenhang, wobei dann $\Delta H$ dem Wert der Enthalpie für die Umwandlung vom Metallhydrid in die Metall/Wasserstoff-Lösung oder umgekehrt bzw. dem Enthalpiewert für die Umwandlung vom Metallhydrid A in das Metallhydrid B oder umgekehrt entspricht. Die Umwandlungsenthalpie ändert auch in diesem Falle in weiten Temperaturintervallen ihren Wert nur vernachlässigbar gering. Bei einer Temperaturänderung im Feststoff verschiebt sich die Wasserstoffkonzentration durch Abgabe oder Aufnahme von Wasserstoff im Feststoff solange, bis der der Feststofftemperatur entsprechende Wasserstoffgleichgewichtsdruck in der Gasphase erreicht ist. Vorteilhaft ist, daß mit Bestimmung der Feststoffmenge im Temperaturfühler die Ansprechempfindlichkeit des Systems auf Temperaturänderungen einstellbar

ist. Denn bei einer großen Feststoffmenge reagiert das Membransystem auf Temperaturänderungen mit nur geringer Wasserstoffkonzentrationsänderung, weil die beispielsweise für eine Druckerhöhung bei konstantem Volumen benötigte Wasserstoffmenge durch Abgabe von Wasserstoff aus dem großen Feststoffvolumen rasch erzeugt ist. Der Temperaturregler reagiert auf Temperaturänderungen schnell. Bei einer geringen Feststoffmenge ist dagegen bei gleicher Temperaturänderung eine größere Wasserstoffmenge abzugeben oder aufzunehmen. Der Temperaturregler reagiert auf Temperaturänderungen träger.

In weiterer Ausbildung der Erfindung ist der Feststoff auf einer Wand im Innenraum des Temperaturfühlers als Film oder Folie angebracht, Patentanspruch 2. Ein derartiger Temperaturfühler ist kompakt und reagiert darüberhinaus im Vergleich mit einem mit Metallgranulat gefüllten Temperaturfühler rascher auf Temperaturänderungen. Zur Reinhaltung der Wasserstoffaustauschfläche ist der Film oder die Folie mit einer für Wasserstoff durchlässigen Schutzschicht überzogen, Patentanspruch 3.

Wird im Temperaturfühler Metallgranulat als aktivierter Feststoff zur Aufnahme von Wasserstoff benutzt, ist es vorteilhaft, das Metallgranulat im Temperaturfühler mit gut wärmeleitenden Metallspänen zu vermischen, um die Reaktion des Temperaturreglers auf Temperaturänderungen anzuheben. Zweckmäßig wird der das Metallgranulat aufnehmende Raum im Temperaturfühler mit einem wasserstoffdurchlässigen, den Feststoff zurückhaltenden Filter abgeschlossen. Vgl. Patentansprüche 4 und 5.

Die Erfindung wird nachfolgend anhand von Ausführungsbeispielen näher erläutert. Die Figuren zeigen im einzelnen:

Fig. 1a Längsschnitt durch ein Thermostatventil mit Membransystem und einem mit Metallgranulat gefüllten Temperaturfühler

Fig. 1b Temperaturfühler mit aufgedampftem Metallfilm

Fig. 2 Zustandsdiagramm schematisch (in Anlehnung an das Feststoffsystem $LaNi_5/LaNi_5H_6$): Wasserstoffdruck über einem Feststoffsystem mit Feststoffphasen Metall/Wasserstoff-Lösung und Metallhydrid in Abhängigkeit von der Wasserstoffkonzentration im Feststoff bei verschiedenen Temperaturen

Fig. 3 Membranauslenkung eines Membransystems mit Wasserstoff als Arbeitsmittel im Gleichgewicht mit $LaNi_5$-Granulat in Abhängigkeit von der Temperatur des Metallgranulats

Fig. 4 Membranauslenkung eines Membransystems mit Wasserstoff als Arbeitsmittel im Gleichgewicht mit FeTi-Granulat in Abhängigkeit von der Temperatur des Metallgranulats

Fig. 5 Membranauslenkung eines Membransystems mit Wasserstoff als Arbeitsmittel im Gleichgewicht mit Pd-Granulat in Abhängigkeit von der Temperatur des Metallgranulats

Fig. 7 Membranauslenkung eines Membransystems

in Abhängigkeit von der Zeit nach plötzlicher Temperaturänderung im Temperaturfühler für ein Membransystem mit Wasserstoff im Gleichgewicht mit $LaNi_5$-Granulat bei verschiedenen Feststoffmengen

Fig. la zeigt schematisch als Temperaturregler ein Thermostatventil mit einem Temperaturfühler la, dessen Innenraum über eine Kapillare 2 mit einem Membranraum 3 verbunden ist. Der Membranraum 3 wird nach außen von einer Gehäusekappe 4 begrenzt, die gasdicht an einer Grundplatte 5 befestigt ist. Im Innern schließt den Membranraum 3 eine Membran gasdicht ab, die im Ausführungsbeispiel als metallischer Balg 6 ausgebildet ist, der sich gegen den Druck einer Rückstellfeder 7 bewegen läßt. Die Rückstellfeder 7 ist zwischen Tragplatte 8 des Balges 6 und der Grundplatte 5 auf Druck vorgespannt. Der Balg 6 ist mit seinem einen Ende ortsfest an der Grundplatte 5 angebracht, das andere Ende wird mit der Tragplatte 8 gasdicht abgeschlossen und ändert je nach Druck im Membranraum 3 seine Lage. Der Balg 6 mit Rückstellfeder 7, die Kapillare 2 und der Temperaturfühler 1 bilden ein Membransystem, bei dem mit steigendem Gasdruck im Membranraum 3 der Balg 6 mehr und mehr zusammengedrückt wird.

An der Tragplatte 8 ist eine Führung 9 für einen Ventilteller 10 befestigt. Die am Ausführungsbeispiel starr und zylindrisch ausgebildete Führung 9 ist in axialer Richtung verschiebbar in der Grundplatte 5 gelagert. In Fig. 1 ist das Thermostatventil in geöffneter

Stellung dargestellt. Das Thermostatventil schließt sich bei steigendem Druck im Membranraum 3. Dabei setzt sich der Ventilteller 10 im Ventilsitz 11 im Strömungsrohr 12 auf. Verringert sich der Druck im Membranraum, so zieht sich der Balg 6 unter dem Druck der Rückstellfeder 7 auseinander, und das Thermostatventil öffnet sich. Die Vorspannung der Feder 7 wird entsprechend der gewählten Solltemperatur eingestellt. Aus Gründen der Übersichtlichkeit sind die hierfür erforderlichen Vorrichtungsteile in Fig.1a nicht dargestellt.

Das Membransystem ist mit Wasserstoff gefüllt, der als gasförmiges Arbeitsmittel dient. Im Ausführungsbeispiel nach Fig. 1a befindet sich im Temperaturfühler Metallgranulat 13, das derart mit Wasserstoff beladen wurde, daß sich die Metall/Wasserstoff-Lösungsphase und die Metallhydridphase beide im Gleichgewicht mit molekularem Wasserstoff in der Gasphase befinden. Zwischen dem Metallgranulat 13 und Kapillare 2 ist ein für Wasserstoff durchlässiges Filter 14 eingesetzt, das beim Wasserstoffaustausch zwischen Metallgranulat 13 und Membranraum 3 das Metallgranulat im Temperaturfühler 1a zurückhält.

Statt des Temperaturfühlers 1a ist an der Kapillaren 2 des Thermostatventils auch ein in Fig. 1b schematisch dargestellter Temperaturfühler 1b anschließbar. Beim Temperaturfühler 1b ist der Feststoff als dünner Metallfilm 15 auf eine Grundplatte 16 des Temperaturfühlers aufgedampft, um eine gute thermische Kopplung

zu erreichen. Diese Kopplung wird - beispielsweise zur Feststellung einer Wandtemperatur - mittels einer Schraubbefestigung durch Ausnehmungen 17 in der Grundplatte 16 hindurch an derjenigen Stelle der Wand, deren Temperatur erfaßt werden muß, noch erhöht. Die Oberflächendurchlässigkeit des Films für Wasserstoff wurde im Ausführungsbeispiel durch das Aufbringen eines weiteren Filmes 18 aus einem Metall mit hoher Wasserstoffpermeationsrate vergrößert.

Die Wirkungsweise eines mit Wasserstoff gefüllten Membransystems, bei dem sich der Wasserstoff im Gleichgewicht mit einer Metall/Wasserstoff-Lösungsphase und einer Metallhydridphase befindet, wird anhand von Fig. 2 erläutert. Fig. 2 zeigt ein Zustandsdiagramm eines Feststoffsystems, dessen Endphasen die Metall/Wasserstoff-Lösung und ein Metallhydrid sind. Im Zustandsdiagramm ist der Gleichgewichtsdruck p des molekularen gasförmigen Wasserstoffs in bar über den Feststoffphasen in Abhängigkeit von der Konzentration des im Feststoff gebundenen Wasserstoffs bei verschiedenen Temperaturen angegeben. Die Temperaturen sind in Grad Kelvin auf im Zustandsdiagramm dargestellten Isothermen eingetragen. Die auf der Abszisse des Zustandsdiagramms angegebene Wasserstoffkonzentration ist ausgedrückt als das Verhältnis der vom Feststoff aufgenommenen Wasserstoffatome H und der Metallatome Me des Feststoffs. Das Zustandsdiagramm ist schematisiert in Anlehnung an dasjenige des Lanthan-Nickel ($LaNi_5$)/Lanthan-Nickel-Hydrid ($LaNi_5H_6$) Systems dargestellt.

Aus dem Zustandsdiagramm nach Fig. 2 ist ersichtlich, daß es bei jeder Temperatur einen Konzentrationsbereich im Feststoff gibt, bei dem der Wasserstoffdruck in der Gasphase mit weitgehender Näherung von der Wasserstoffkonzentration im Feststoff unabhängig ist. In diesen Bereichen koexistiert im Feststoff die wasserstoffarme Metall/Wasserstoff-Lösungsphase mit der wasserstoffreichen Metallhydridphase. Mit steigender Wasserstoffkonzentration im Feststoff nimmt bei vernachlässigbar geringer Veränderung des Wasserstoffdrucks in der Gasphase der Anteil des Metallhydrids gegenüber dem Anteil der Metall/Wasserstoff-Lösung im Festkörper zu und umgekehrt. Die im Zustandsdiagramm mit gestrichelten Linien eingetragenen Grenzkurven markieren die Übergänge zwischen diesem Gebiet der Koexistenz zweier Feststoffphasen und den bei geringer oder hoher Wasserstoffkonzentration vorhandenen Einphasengebieten, in denen entweder nur die Metall/Wasserstoff-Lösungsphase oder die Metallhydridphase gebildet wird. Das im Temperaturfühler eingesetzte Metallgranulat weist eine im Zweiphasengebiet liegende Feststoffzusammensetzung auf.

In Fig. 2 ist schematisch mit einem Pfeil mit durchgezogener Linie der Verlauf des Wasserstoffdruckes in der Gasphase eingetragen, der sich einstellt, wenn sich in einem Feststoff mit der Zusammensetzung a die Temperatur von 308 K auf 336 K ändert. Bei einer solchen Erwärmung wird unter Verringerung der Wasserstoffkonzentration aus dem Feststoff Wasserstoff freigesetzt. Der Wasserstoffdruck in der Gasphase nimmt von 2 bar bis auf 5 bar zu. Bei 5 bar und 336 K

ist die Wasserstoffkonzentration im Feststoff im Ausführungsbeispiel bis auf eine Konzentration b zurückgegangen.

Die Veränderung der Wasserstoffkonzentration im Feststoff bei einem Temperaturwechsel hängt jedoch zusätzlich auch von der Feststoffmenge im Temperaturfühler 1a oder 1b ab. Der in Fig. 2 mit strichpunktierter Linie eingetragene Pfeil gibt den Verlauf der Wasserstoffkonzentration in einem qualitativ gleichwertigen Feststoff an, für einen Feststoff also, dessen Wasserstoffkonzentration bei 308 K und 2 bar ebenfalls dem Wert a entspricht, das jedoch im Temperaturfühler in größerer Menge eingesetzt ist, als das vorbeschriebene. Bei konstantem Volumen des Membransystems ändert sich bei großer Feststoffmenge im Temperaturfühler 1a oder 1b bei gleicher Temperaturdifferenz die Wasserstoffkonzentration im Feststoff weniger stark als bei geringer Feststoffmenge im Temperaturfühler. Die bei 5 bar und 336 K erreichte Wasserstoffkonzentration im Feststoff ist mit c angegeben.

Wird ein Metallgranulat oder ein Metallfilm, dessen Zustandsänderung in Fig. 2 angegeben ist, in einem in Fig. 1a dargestellten Thermostatventil mit Temperaturfühler 1a oder 1b eingesetzt, so wird das Thermostatventil bei steigender Temperatur im Temperaturfühler unter Wasserstoffabgabe aus dem Feststoff geschlossen. Bei Temperaturabnahme nimmt der Feststoff Wasserstoff auf, die Wasserstoffkonzentration im Feststoff steigt, und bei fallendem Wasserstoffdruck in der Gasphase öffnet sich das Thermostatventil.

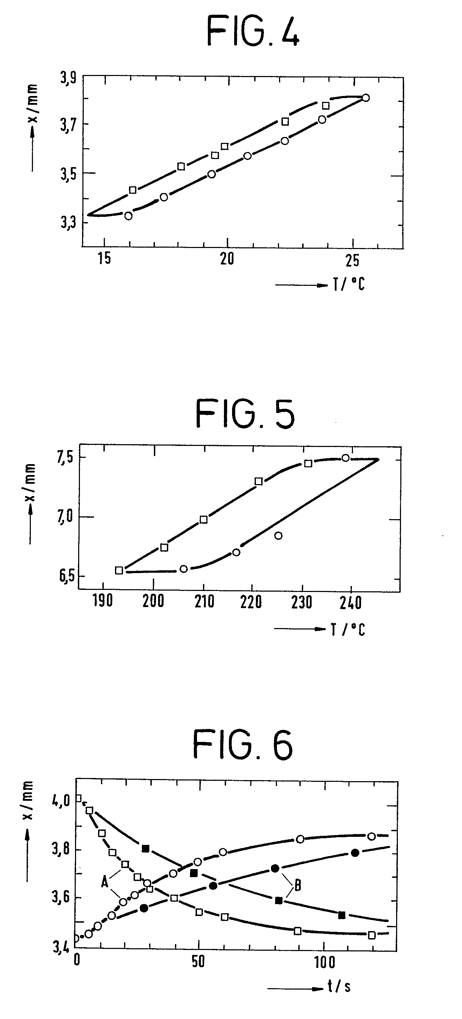

Fig. 3 zeigt die Auslenkung x in mm, die im Thermostatventil gemäß Fig. 1a der Balg 6 eines Membransystems erfährt, das mit Wasserstoff im Gleichgewicht mit Metallgranulat aus $LaNi_5/LaNi_5H_6$ gefüllt ist. Die Auslenkung x ist in Abhängigkeit von der Temperatur T in °C des Metallgranulats angegeben. Wird im Temperaturfühler statt $LaNi_5/LaNi_5H_6$ ein Metallgranulat aus FeTi/FeTiH im Gleichgewicht mit Wasserstoff verwendet, so ergibt sich für den Balg 6 die in Fig. 4 wiedergegebene Auslenkung x in mm. Für beide Systeme erstreckt sich der Temperaturbereich zwischen 12 °C (285 K) und 32 °C (305 K). In den Figuren 3 und 4 und den nachfolgenden Figuren 5 und 6 ist jeweils die Balgauslenkung bei ansteigender Temperatur mit kreisförmig gezeichneten Meßpunkten, die Balgauslenkung bei fallender Temperatur mit quadratisch gezeichneten Meßpunkten markiert.

Fig. 5 zeigt die Auslenkung des Balges 6 für ein Metallgranulat aus Pd/PdH im Gleichgewicht mit Wasserstoff im Temperaturbereich zwischen 192 °C (465 K) bis 247 °C (520 K). Bei allen drei vorgenannten Ausführungsbeispielen wurden annähernd die gleichen Metallgranulatmengen im Temperaturfühler eingesetzt.

Aus den Fig. 3 und 4 ist ersichtlich, daß in gleichen Temperaturbereichen mehrere Metall/ Metallhydrid-Feststoffe für die Anwendung in Membransystemen zur Verfügung stehen. Dabei ergibt sich beispielsweise im Temperaturbereich zwischen 12 °C bis 32 °C (285 bis 305 K) bei Verwendung von $LaNi_5/LaNi_5H_6$ eine stärkere Druck-

differenz zwischen Anfangs- und Enddruck als bei Verwendung von FeTi/FeTiH. Neben den in den Ausführungsbeispielen angegebenen intermetallischen Verbindungen kommen eine Vielzahl weiterer Metalle oder Metallverbindungen in Betracht, beispielsweise $TiCr_{1.8}$, V, Ti, Mg, $Mg_2Ni$, $Mg_2Ni$, $Mg_2Cu$. Zur Optimierung

des Wasserstoffaustausches können den Metallverbindungen weitere Legierungskomponenten hinzugefügt werden. Für hohe Temperaturen um 500 K im Druckbereich zwischen 1 und 10 bar eignen sich neben dem bereits erwähnten Pd auch Mg, $Mg_2Ni$, $Mg_2Cu$, Ti, für niedrige Temperaturen um 200 K im gleichen Druckbereich $TiCr_{1.8}$. Die geeignetste Ausführungsform der Feststoffe auf Basis von intermetallischen Verbindungen ist feinkörniges Granulat. Reine Elemente wie Mg, Ti, V werden als Folien oder Aufdampffilme bevorzugt. Der niedrige Kondensationspunkt des Wasserstoffs erlaubt dessen Einsatz als Arbeitsmittel zum Regeln von Membransystemen bis zu tiefsten Temperaturen, ohne daß unerwünschte Kondensationen innerhalb des Membransystems zu befürchten sind, die den erforderlichen Regeldruck verfälschen.

In Fig. 6 ist die Membran- oder Balgauslenkung x in mm des im Thermostatventil nach Fig. 1 angegebenen Membransystems in Abhängigkeit von der Zeit t in Sekunden (s) nach einer plötzlichen Temperaturänderung dargestellt. Der Temperaturfühler enthält ein $LaNi_5/LaNi_5H$-Granulat. Wird bei gleicher Wärmeankopplung eine große Granulatmenge eingesetzt, so ergibt sich eine feinfühligere Regelung (Kurven A) als bei einer kleineren Granulatmenge im Temperaturfühler (Kurven B). Von der im Temperaturfühler vorhandenen Granulatmenge hängt somit die Ansprechempfindlichkeit des Regelsystems auf Temperaturänderungen ab. Im allgemeinen werden nur sehr kleine Granulatmengen benötigt. Es können somit raumsparende Temperaturfühler gebaut werden.

Wegen der geringen Wärmeleitung im Metallgranulat ist es bei Auslegung des Temperaturfühlers zweckmäßig, dafür Sorge zu tragen, daß möglichst viel Granulat mit wärmeleitenden Wänden des Temperaturfühlers in Berührung steht. Um die Wärmeleitung anzuheben, sind Metallspäne, beispielsweise aus Kupfer, geeignet, die mit dem Granulat vermischt werden. Wie im Ausführungsbeispiel gemäß Fig. 1b gezeigt, wird durch Metallfilme oder Metallfolien eine sehr gute thermische Kopplung mit der Wand des Temperaturfühlers erzielt werden. Dabei kann es zweckmäßig sein, zwischen Grundplatte 16 des Temperaturfühlers 1b und Metallfolie oder -film eine dünne Zwischenschicht anzubringen, um die Haftung des Wasserstoff aufnehmenden Feststoffs zu verbessern. Bei aufzudampfenden Metallfilmen eignen sich beispielsweise dünne Goldschichten als Zwischenschicht.

Bei Herstellung eines Temperaturreglers der erfindungsgemäßen Art mit Metallgranulat muß im allgemeinen das Metallgranulat in Wasserstoffatmosphäre "aktiviert" werden, um die Oberflächendurchlässigkeit des Feststoffs für Wasserstoff zu erhöhen. Hierzu eignen sich beispielsweise Verfahren, wie sie für FeTi von J.J. Reilly et al, "Formation and Properties of Iron Titanium Hydride", Anorganic Chemistry, 1974, Seiten 218 ff sowie in DE-OS 28 11 875, DE-OS 30 22 708 und US-PS 4 079 523 beschrieben sind. Bei diesen Aktivierungsprozessen wird das Metallgranulat bei erhöhter Temperatur mit Wasserstoff begast. Dabei wird es in mehreren Zyklen zwischen 400 K und 700 K einem Wasserstoffdruck zwischen 1 und 5 bar ausgesetzt. Die Aktivierung des

Metallgranulats läßt sich innerhalb des Membransystems, nach Einfüllen des Granulats unter Wasserstoffatmosphäre durchführen. Die jeweils für das Membransystem benötigte Wasserstoffmenge wird bei gegebenem Raumvolumen für eine vorgegebene mittlere Temperatur, die sich aus der insgesamt vom Thermostatventil auszusteuernden Temperaturdifferenz ergibt und für den der mittleren Temperatur entsprechenden Wasserstoffgleichgewichtsdruck berechnet. Die Aktivierung des Metallgranulats im Membransystem kann dann in einfacher Weise durch mehrmaliges Aufheizen und Abkühlen des Membransystems erfolgen. Diese Aktivierung kann bei Metallfolien und Aufdampffilmen entfallen. Die Oberflächendurchlässigkeit wird dann durch Auftragen eines weiteren dünnen Films (im Ausführungsbeispiel nach Fig. 1b Film 18) aus einem geeigneten Metall wie Pd, Fe oder Ni erhöht.

Die Verwendung von Wasserstoff/Metallhydrid-Füllungen gemäß der Erfindung in Temperaturreglern ist selbstverständlich nicht auf Thermostatventile der in Fig. 1 dargestellten Art beschränkt, die sich bei einer Temperaturerhöhung im Metallgranulat schließen. Solche Thermostatventile sind jedoch für die Regelung des Zulaufs von Heizmitteln in Heizungssystemen geläufig. Temperaturregler mit Membransystemen zur Regelung von Anlagen in Abhängigkeit von der Temperatur werden in vielfacher Weise, beispielsweise auch in der chemischen Verfahrenstechnik angewandt. Auch für solche Temperaturregler sind Wasserstoff/Metallhydrid-Füllungen geeignet.

## P a t e n t a n s p r ü c h e

1. Temperaturregler mit in Abhängigkeit vom Druck eines gasförmigen Arbeitsmittels über eine Membran gegen eine Feder bewegbaren Stellgliedes und mit einem Temperaturfühler, dessen Innenraum mit Arbeitsmittel gefüllt ist und räumlich mit einem die Membran aufweisenden gasdichten Membranraum derart verbunden ist, daß eine Temperaturänderung im Temperaturfühler den Druck im Membranraum verändert, d a d u r c h   g e k e n n z e i c h n e t , daß als Arbeitsmittel Wasserstoff im thermodynamischen Gleichgewicht mit einem in bekannter Weise im Temperaturfühler (1a oder 1b) angeordneten, zumindest zwei für den Austausch mit Wasserstoff aktivierte Feststoffphasen aufweisenden Feststoff (13 oder 15) verwendet wird, wobei entweder die eine Feststoffphase ein Wasserstoff in Lösung enthaltendes Metall oder eine metallische Verbindung und die andere Feststoffphase ein Hydrid des Metalls oder der metallischen Verbindung bildet, oder die Feststoffphasen aus zwei sich in thermodynamischem Gleichgewicht miteinander befindenden Hydriden des Metalls oder der metallischen Verbindung bestehen, und daß im Temperaturfühler (1a oder 1b) eine in Abhängigkeit von vorgegebener Zeitkonstanten des Temperaturreglers bemessene Feststoffmenge eingesetzt ist.

2. Temperaturregler nach Anspruch 1, d a d u r c h g e k e n n z e i c h n e t , daß der Feststoff (15) auf einer Wand (16) im Innenraum des Temperaturfühlers (1b) als Film oder Folie angebracht ist.

3. Temperaturregler nach Anspruch 2, d a d u r c h g e k e n n z e i c h n e t , daß der Film oder die Folie mit einer für Wasserstoff durchlässigen Schutzschicht (18) überzogen ist.

4. Temperaturregler nach Anspruch 1, d a d u r c h g e k e n n z e i c h n e t , daß als Feststoff ein Metallgranulat (13) vermischt mit gut wärmeleitenden Metallspänen eingesetzt ist.

5. Temperaturregler nach Anspruch 4, d a d u r c h g e k e n n z e i c h n e t , daß zwischen Membranraum (3) und Feststoff enthaltendem Innenraum des Temperaturfühlers (1a) ein für Wasserstoff durchlässiges, den Feststoff zurückhaltendes Filter (14) angeordnet ist.

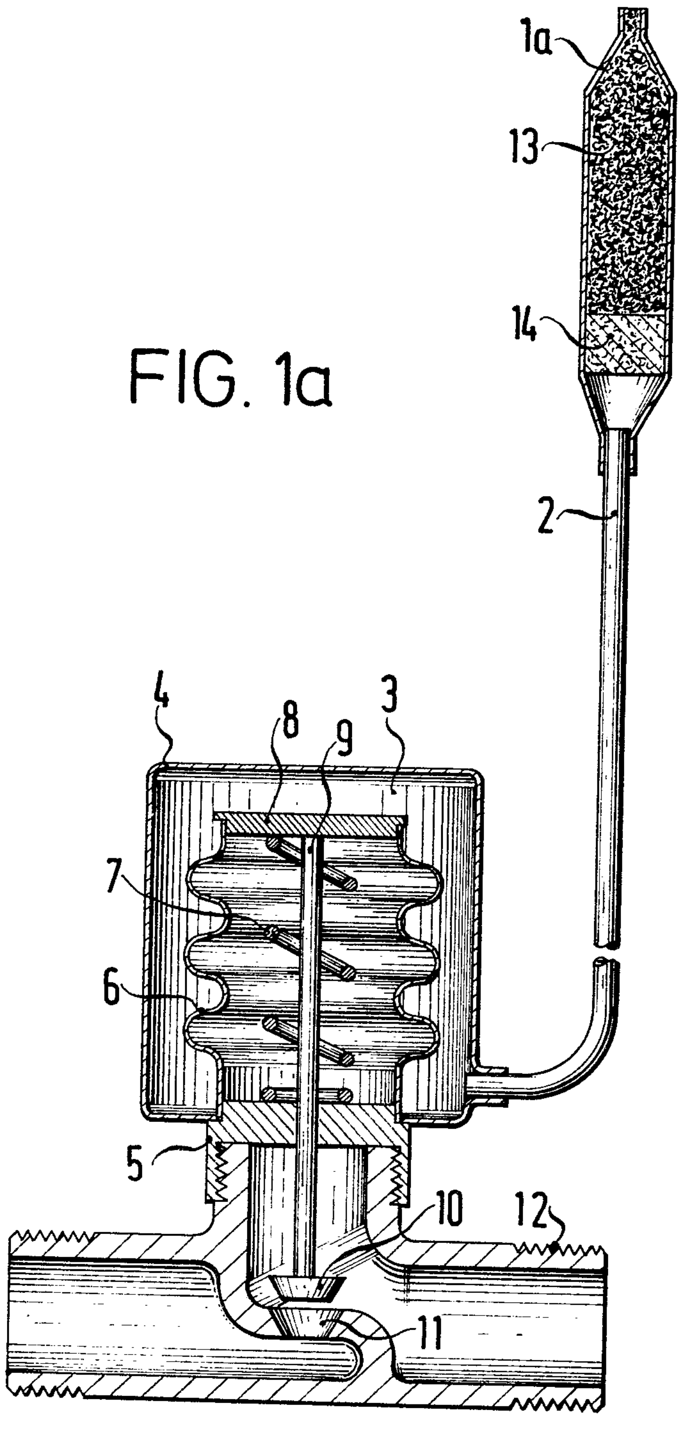


FIG. 1a

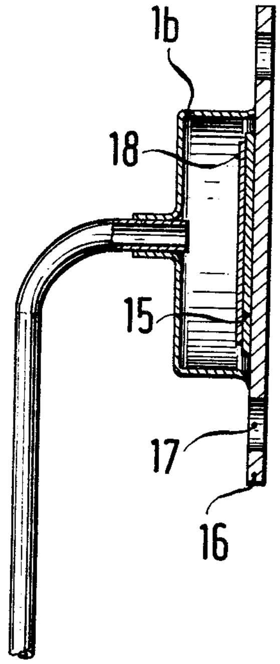


FIG. 1b

FIG. 2

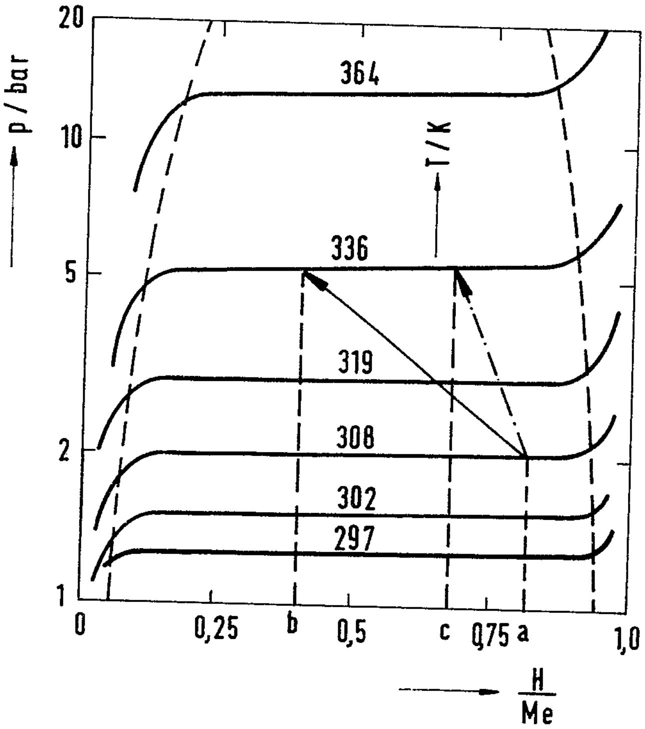
20
10
5
2
1
p / bar
364
336
319
308
302
297
T/K
0
0,25
b
0,5
c
0,75
a
1,0
H
Me

FIG. 3

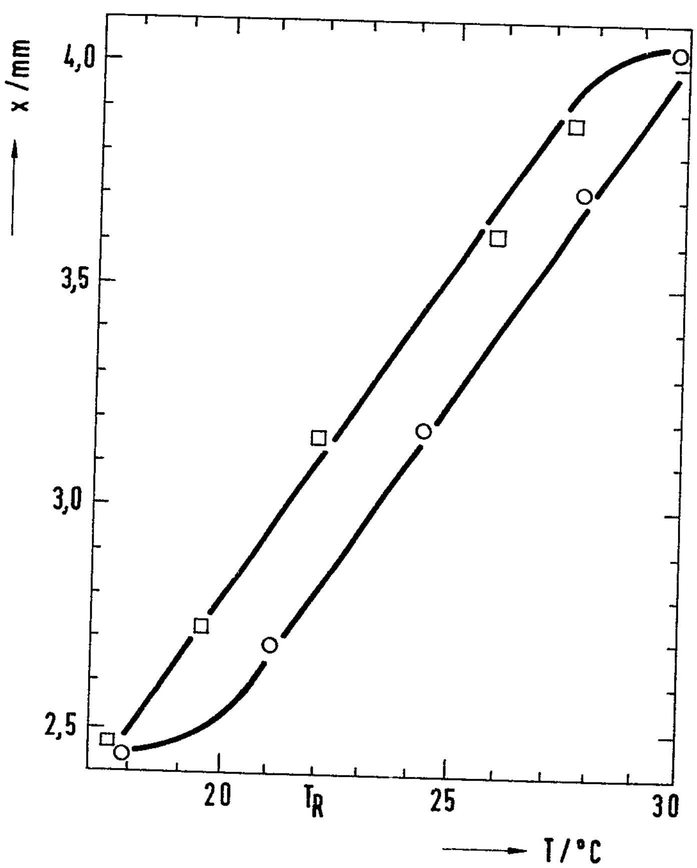
4,0
3,5
3,0
2,5
x /mm
20
$T_R$
25
30
T/°C

FIG. 4

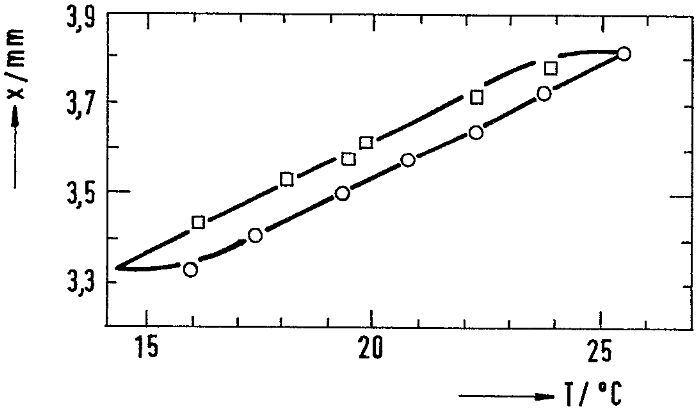


FIG. 5

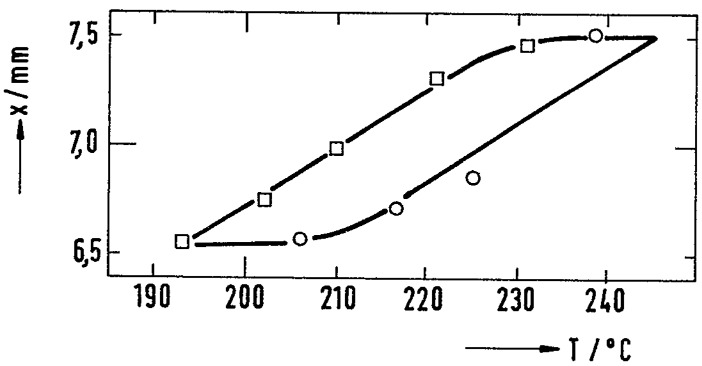


FIG. 6